# EUROPÄISCHE PATENTSCHRIFT

(11) **EP 1 457 760 B1**
(45) Veröffentlichungstag und Bekanntmachung des Hinweises auf die Patenterteilung: **01.09.2010**
(21) Anmeldenummer: 04004761.5
(22) Anmeldetag: 02.03.2004
(51) Int. Cl.: G01C 21/22, G01S 5/14

(54) **Verfahren zur Bestimmung einer Fläche**
Method for determining a surface
Méthode pour déterminer une surface

(30) Priorität: 03.03.2003 DE 10309253; 31.03.2003 DE 10314486
(43) Veröffentlichungstag der Anmeldung: 15.09.2004
(73) Patentinhaber: Lacos Computerservice GmbH, 07937 Zeulenroda (DE)
(72) Erfinder: Damme, Thomas, 07937 Zeulenroda (DE); Damme, Bernd, 07937 Langenwolschendorf (DE)
(74) Vertreter: Kruspig, Volkmar

(56) Entgegenhaltungen:
- EP-A- 0 148 704
- DE-A- 3 744 533
- DE-A- 10 051 908
- DE-A- 19 756 297
- US-A- 5 270 937

## Beschreibung

Die Erfindung betrifft ein Verfahren zur Bestimmung einer Fläche, insbesondere eines Feldes, Feldstücks oder Schlages mit Hilfe von Geokoordinaten, zum Zweck der Dokumentation und/oder Navigation.

Zur Positionsbestimmung im Feld, z.B. für Arbeiten, die mit Hilfe von Traktoren ausgeführt werden, besteht zum einen die Möglichkeit der Linearisierung der Schläge und Wegmessung. Die Wegmessung findet hier unter Berücksichtigung der Arbeitsbreite statt. Systematisch wird dabei der Schlag linearisiert, d.h. die einzelnen Fahr- oder Arbeitsspuren werden nacheinander abgearbeitet. Entsprechend einer vorhandenen Kartierung können nach den erforderlichen Wegelängen von einem Rechner die geforderten Aktivitäten gesteuert werden. Die Erfassung der Wege muß jedoch mit sehr hoher Genauigkeit erfolgen. Das heißt, eine schlupffreie Wegmessung ist die Voraussetzung des beschriebenen Verfahrens. Ein weiteres Problem dieser Technik besteht in der Einbeziehung der Arbeitsbreite. Da bei der Düngung mit größeren Arbeitsbreiten ein exaktes Anschlußfahren nur in Verbindung mit Fahrgassen möglich ist, beschränkt sich die kurz erläuterte Technik ausschließlich auf Maßnahmen im Bestand mit Fahrgassen für die Düngung und für Spritzarbeiten.

Eine weitgehend fehlerfreie Ortung läßt sich durch Einsatz von Satelliten erreichen. Basis hierfür ist das sogenannte GPS-System (Global Positioning System), bei welchem von jedem Standpunkt auf der Erde mindestens vier stationär lokalisierte Satelliten erreichbar sein müssen. Über die Laufzeitmessung auf Funkbasis kann das Orten eines mit einem GPS-Empfänger versehenen Fahrzeugs erreicht werden. In Verbindung mit einem GPS-Empfänger können tragbare Computer Verwendung finden, mit deren Hilfe eine Flächenaufmaß-Bestimmung, eine Schlagdokumentation und eine mobile Felddatenerfassung möglich wird. Hierfür müssen die einzelnen Feldgrenzen ermittelt und eine Berechnung der Felddaten aus den erfaßten Koordinaten, d.h. der Fläche und dem Umfang, vorgenommen werden. Bei derartigen Systemen zur Felddatenerfassung mit Flächenkontrolle ist zusätzlich eine manuelle Eingabe von Positionen mit Hilfe von Koordinaten erforderlich, die beispielsweise vom Katasteramt bereitgestellt werden.

Wird auf einer solchen Basis ein Geoinformationsystem geschaffen, dann ist eine sehr große Menge von Daten zu verwalten mit der Folge eines erheblichen hardware-, aber auch softwareseitigen Aufwands.

Eine eindeutige Identifikation eines Feldes, eines Feldstücks oder Schlages ist ohne ergänzende Angaben nicht, mindestens jedoch nicht ohne weiteres möglich.

Weiterhin ist es bekannt, mit Hilfe von geografischen Koordinaten, d.h. Angaben zur geografischen Breite und geografischen Länge, die geografische Lage eines beliebigen Ortes auf der Erdoberfläche zu bestimmen. Jede Koordinate definiert demnach eindeutig einen bestimmten Punkt, was die Grundlage für moderne Navigationssysteme in Verbindung mit digitalen Karten, z.B. im Bereich der Kraftfahrzeugtechnik, bildet.

Aus der US-A-5 270 937 ist ein Verfahren zur Bestimmung einer Fläche, insbesondere eines Feldes oder Feldstückes mit Hilfe von Geokoordinaten zum Zweck der Dokumentation und/oder Navigation vorbekannt. Dort wird in einem Territorium jeder relevanten Einzelfläche ein Flächenidentifikator zugeordnet, der aus einer bestimmten numerischen und/oder alphanumerischen Zahlenfolge besteht. Die Zahlenfolge wird abgeleitet aus entsprechenden Geokoordinaten und dem umgebenen Rechteck. Die Erzeugung des Flächenidentifikators wird mit Hilfe eines Computers realisiert und es wird eine entsprechende Datenbank bereitgestellt, die Bestandteil eines Geoinformationssystems ist.

Die DE 197 56 297 A1 offenbart ein Verfahren und eine Anordnung zur Aufbereitung und Bereitstellung von Satelliten- und luftbildgestützten Bildkarten für die verkehrstechnische Leitung von Kraftfahrzeugen. Um ständig aktuell angepasste satellitengestützte Karteninformationen ortsbezogen einem Nutzer in einem Fahrzeug zur Verfügung zu stellen, wird unter Verwendung des bekannten GPS-Systems und eines individuellen Bordkartensystems auf der Basis von satellitengestützten digitalen Geodaten eine Verknüpfung beider Systeme vorgenommen derart, dass bedarfsabhängig vom Nutzer über eine Telefon- und/oder Mobilfunktelefonverbindung digitale Geodaten von einem zentralen Server abrufbar sind, um im Anschluss die abgerufenen Daten dem Kraftfahrzeug spezifischen Bordkartensystem zuzuleiten.

Aus dem Vorgenannten ist es Aufgabe der Erfindung, ein weiterentwickeltes Verfahren zur Bestimmung einer Fläche, insbesondere eines Feldes, Feldstücks oder Schlages mit Hilfe von Geokoordinaten zum Zweck der Dokumentation und/oder Navigation anzugeben, wobei mit Hilfe des Verfahrens eine einfach strukturierte Datenbank geschaffen werden soll, mit der Flächen kontrolliert, verwaltet, aber auch gesucht werden können, so daß sich im Bereich der Land- und Forstwirtschaft zum Zweck des Umwelt- und Naturschutzes, aber auch im Bereich der Geologie und des Bauwesens und letztendlich im Bereich der Katasterführung Vorteile ergeben, indem geografische Flächen in besonders einfacher Weise definiert und in ihrer Größe abschätzbar sind.

Die Lösung der Aufgabe der Erfindung erfolgt mit einem Verfahren in seiner Definition gemäß der Lehre nach Patentanspruch 1, wobei die Unteransprüche zweckmäßige Ausgestaltungen und Weiterbildungen darstellen.

Bei dem Verfahren wird in einem, an sich beliebigen Territorium jeder relevanten Einzelfläche, die z.B. eine landwirtschaftliche Nutzfläche oder eine Fläche der Forstwirtschaft sein kann, ein Flächenidentifikator zugeordnet.

Der Flächenidentifikator besteht aus einer vielstelligen, insbesondere 22-stelligen numerischen und/oder alphanumerischen Zeichenfolge, die aus den jeweiligen Geokoordinaten eines Eckpunkts der Fläche und dem die Fläche umgebenden Rechteck gebildet wird. Der Flächenidentifikator wird mittels eines vorgegebenen Schlüssels computergestützt erzeugt.

Die im jeweiligen Territorium vorhandenen Einzelflächen werden dann über die jeweiligen, durch den Flächenidentifikator zugeordneten, umschreibenden oder begrenzenden Rechtecke in einer Datenbank abgelegt, die wiederum Bestandteil eines Geoinformationssystems ist.

Auch erfolgt eine Bereitstellung des Zugriffs zu den Flächenidentifikatoren der Datenbank mittels drahtlosem oder drahtgebundenem Datenaustausch.

Zum Zweck der Navigation zur gesuchten Fläche mittels eines mobilen GPS-Empfängers wird dann die Eingabe einer Eckkoordinate oder eines eindeutig in der Fläche liegenden Punktes vorgenommen. Der GPS-Empfänger signalisiert dann beim Überschreiten der Grenze des mittels des jeweiligen Flächenidentifikators definierten Rechtecks das Erreichen der gesuchten Fläche, die sich innerhalb des definierten Rechtecks befindet.

Erfindungsgemäß ist aus jedem Flächenidentifikator durch Anwendung des Schlüssels die Größe des umgebenden Rechtecks und damit näherungsweise die Fläche des betreffenden Feldes oder Schlages bestimmbar.

Anhand des Flächenidentifikators als codierter Kennzahl ist das Überschreiten einer Flächengrenze bei gleichzeitiger GPS-Navigation feststellbar. Hierdurch können gezielt Aktivitäten ausgelöst oder gestoppt werden, wie z.B. das Bearbeiten der Fläche durch beispielsweise Pflügen, Grubbern, Düngen, Säen, Dreschen und so weiter.

Der Fernzugriff auf die Datenbank erfolgt bevorzugt über ein öffentliches Telekommunikationsnetz, insbesondere GSM- oder UMTS-Netz. Als Schnittstelle zu einem Mobiltelefon kann auf JRDA oder Bluetooth zurückgegriffen werden.

Der Flächenidentifikator weist wie vorerwähnt bevorzugt 22 alphanumerische Stellen auf. Die Stellen 1 bis 5 definieren die x-Koordinate des linken oberen Eckpunkts des Rechtecks, welches das jeweilige Feld bzw. die jeweilige Fläche umgibt. Die Stellen 6 bis 10 bestimmten die y-Koordinate des linken oberen Eckpunkts des Rechtecks, welches die betreffende Fläche umgibt.

Die Ausdehnung des Rechtecks, welches das Feld bzw. die Fläche in x-Richtung umgibt, ist in den Stellen 11 bis 13 und die Ausdehnung des Rechtecks, welches das Feld in y-Richtung umgibt, in den Stellen 14 bis 16 beschrieben.

Die Entfernung eines eindeutig im Feld befindlichen Punktes vom linken oberen Eckpunkt in x-Richtung ist mit den Stellen 17 bis 19 und die Entfernung dieses eindeutig im Feld befindlichen Punktes vom linken oberen Eckpunkt in y-Richtung durch die Stellen 20 bis 22 bestimmt. Die Codierung erfolgt mit den Zeichen 0 bis 9 und den Buchstaben A bis Z als Zahlensystem mit der Basis 36.

Mit dem Flächenidentifikator wie vorstehend beschrieben kann jede beliebige Fläche eindeutig definiert werden, so daß sich hier eine sehr sichere Möglichkeit der Verwaltung von Flächendaten ergibt. Der besondere Vorteil der Erfindung liegt darin, daß mit Hilfe des Flächenidentifikators in EDV-Systemen eine leichte Bearbeitbarkeit und eindeutige Identifizierung anhand des programmtechnisch vorgegebenen Schlüssels möglich wird, so daß im Sinne der Aufgabenstellung kostengünstig weltweit nutzbare Datenbanken zu beliebigen Flächen aufgebaut, verwaltet und aktualisiert werden können.

Mit Hilfe eines mobilen GPS-Systems besteht die Möglichkeit, sich zu einer Fläche navigieren zu lassen, indem die Koordinaten der Eckpunkte des umgebenden Rechtecks oder die Koordinaten des festen Punktes innerhalb der Fläche hierfür benutzt werden. Wenn ein bestimmtes Feld kontrolliert werden soll, dann ist eine Navigation wie vorstehend erläutert besonders zweckmäßig.

Weiterhin sind durch den Flächenidentifikator die äußeren Begrenzungen des Feldes in den vier Himmelsrichtungen festgelegt. Innerhalb des derart definierten Rechtecks befindet sich grundsätzlich die gesuchte Fläche. In dem Moment, wenn bei der Navigation oder Suche das definierte Rechteck überschritten wird, steht fest, daß die gesuchte Fläche gefunden wurde.

Da der Flächenidentifikator als einfache, rechentechnisch leicht zu handhabende Kennzahl gegeben ist, kann in besonders einfacher Weise die Steuerung eines Ereignisses bei Überschreiten einer bestimmten, geografisch festgelegten Grenze ausgelöst werden.

Aus der rechteckigen Umgrenzung, die bei Bekanntsein des Flächenidentifikators hergeleitet werden kann, besteht die Möglichkeit der ungefähren Abschätzung der Größe des jeweiliges Feldes oder Schlages.

Mit dem einfachen Zuordnen von Flächen innerhalb eines quasi beliebigen Territoriums und der Verwaltung über den Flächenidentifikator reduzieren sich die Investitionskosten bei Erstellung und Einführung von Geoinformationssystemen, z.B. zur Dokumentation von Ver- und Entsorgungsnetzen. Es liegt im Sinne der Erfindung, daß im Datenbestand vorhandene Übersichtspläne, flächendeckende Stadtgrundkarten umfassend Katasterangaben mit topographischen Daten, und weitere Informationen mit in die Datenbank übernommen werden können, indem beispielsweise überprüft wird, welche Flächen von Energieleitungen geschnitten oder überquert werden.

Das so erweiterbare Geoinformationssystem, dessen Datenbestand die entsprechenden Informationen zu Flurstücken, Flächen und Blockstrukturen, Topografie sowie Grundstücks- und Gebäudedaten enthält, wird dann zu einem Facility Management System, womit Aufgaben wie Raumplanung, Reinigungsmanagement, Wartung und Instandhaltung und so weiter gelöst werden können.

Die Datenkommunikation mit einer Einheit aus einem GPS-Empfänger und einem tragbaren Computer, z.B. PDA zum Zweck des Zugriffs auf die Datenbank erfolgt via GSM oder UMTS. Bevorzugt werden GSM-Terminals nur für die Datenkommunikation eingesetzt, so daß keine herkömmlichen Mobilfunkverträge, die Kosten nach sich ziehen, nötig sind, sondern lediglich Datenfunkverträge geschlossen werden müssen. Ein weiterer Vorteil ist hier, daß keine Bindung zu einem bestimmten Netzbetreiber erforderlich wird.

Die Erfindung soll nachstehend anhand eines Ausführungsbeispiels näher erläutert werden.

Das Ausführungsbeispiel betrifft die Ermittlung eines typischen Flächenidentifikators in Form einer 22-stelligen Kennziffer, die aus alphanumerischen Zeichen besteht und mit deren Hilfe weltweit eine Fläche, insbesondere ein Feld, eindeutig identifizierbar ist und das die Fläche begrenzende Rechteck in seiner Ausdehnung beschrieben werden kann.

Der Flächenidentifikator weist folgenden Aufbau auf:
- Stellen 1- 5:: x-Koordinate des linken oberen Eckpunkts des Rechtecks, welches das Feld umgibt (geografische Länge, WGS84, Dezimalgrad * 100000)
- Stellen 6-10:: y-Koordinate des linken oberen Eckpunkts des Rechtecks, welches das Feld umgibt (geografische Länge, WGS84, Dezimalgrad * 100000)
- Stellen 11-13:: Ausdehnung des Rechtecks, welches das Feld umgibt, in x-Richtung
- Stellen 14-16:: Ausdehnung des Rechtecks, welches das Feld umgibt, in y-Richtung
- Stellen 17-19:: Entfernung eines eindeutig im Feld befindlichen Punktes vom linken oberen Eckpunkt - x-Richtung
- Stellen 20-22:: Entfernung eines eindeutig im Feld befindlichen Punktes vom linken oberen Eckpunkt - y-Richtung

Die Codierung erfolgt mit den Zeichen "0" ... "9" und "A" ... "Z" (Zahlensystem mit der Basis 36).

Dies bedeutet, daß ein Feld mit dem Eckpunkt 12.09051° östliche Länge, 50.02401 nördliche Breite und dem umgebenden Rechteck von 725m in x-Richtung, 357m in y-Richtung und dem im Feld befindlichen Punkt 12.09239° östliche Länge, 50.02323 nördliche Breite bei einem Abstand des Punktes vom Eckpunkt 135m in x-Richtung und 87m in y-Richtung den Flächenidentifikator "0PWWR2Z7VL0K509X03R02F" besitzt.

Im einzelnen:
Für die x-Koordinate des Eckpunkts: OPWWR
für die y-Koordinate des Eckpunkts: 2Z7VL
für die Ausdehnung in x-Richtung: OK5
für die Ausdehnung in y-Richtung: 09X
für den Abstand des Punktes in x-Richtung: 03R
für den Abstand des Punktes in y-Richtung: 02F.

## Patentansprüche

1. Verfahren zur Bestimmung einer Fläche, insbesondere eines Feldes, Feldstücks oder Schlages, mit Hilfe von Geokoordinaten zum Zweck der Dokumentation und/oder Navigation, bei welchem:
- in einem Territorium jeder relevanten Einzelfläche ein Flächenidentifikator zugeordnet wird, welcher aus einer vielstelligen, insbesondere 22-stelligen numerischen und/oder alphanumerischen Zeichenfolge, die aus den jeweiligen Geokoordinaten eines Eckpunkts und dem umgebenden Rechteck gebildet wird, besteht und der jeweils mittels eines vorgegebenen Schlüssels computergestützt erzeugt wird,
- die im Territorium vorhandenen Einzelflächen über die jeweiligen durch den Flächenidentifikator zugeordneten umschreibenden oder begrenzenden Rechtecke in einer Datenbank abgelegt werden, die Bestandteil eines Geoinformationssystems ist,
- eine Bereitstellung des Zugriffs zu den Flächenidentifikatoren der Datenbank mittels drahtlosem oder drahtgebundenem Datenaustausch erfolgt, wobei eine Navigation zur gesuchten Fläche mittels mobilem GPS-Empfänger durch Eingabe einer Eckkoordinate oder eines eindeutig in der Fläche liegenden Punktes vorgenommen wird und der mobile GPS-Empfänger beim Überschreiten der Grenze des mittels des jeweiligen Flächenidentifikators definierten Rechtecks das Erreichen der gesuchten Fläche, die sich innerhalb des definierten Rechtecks befindet, signalisiert und wobei
- aus jedem Flächenidentifikator durch Anwendung des Schlüssels die Größe des umgebenden Rechtecks und damit näherungsweise die Fläche des betreffenden Feldes oder Schlages bestimmbar ist.

2. Verfahren nach Anspruch 1,
**dadurch gekennzeichnet, daß**
anhand des Flächenidentifikators als codierter Kennzahl das Überschreiten einer Flächengrenze bei gleichzeitiger GPS-Navigation feststellbar ist und hierduch gezielt Aktivitäten, wie das Bearbeiten der Fläche durch z.B. Pflügen, Grubbern, Düngen, Säen, Dreschen, steuerbar sind.

3. Verfahren nach einem der vorangegangenen Ansprüche,
**dadurch gekennzeichnet, daß**
der Fernzugriff auf die Datenbank über ein öffentliches Telekommunikationsnetz, drahtgebunden oder drahtlos, hier insbesondere GSM- oder UMTS-Netz erfolgt.

4. Verfahren nach einem der vorangegangenen Ansprüche,
**dadurch gekennzeichnet, daß**
der Flächenidentifikator in Stelle 1 bis 5 die x-Koordinate des linken oberen Eckpunkts des Rechtecks, welches die Fläche umgibt,
in Stelle 6 bis 10 die y-Koordinate des linken oberen Eckpunkts des Rechtecks, welches die Fläche umgibt,
in Stelle 11 bis 13 die Ausdehnung des Rechtecks, welches die Fläche umgibt, in x-Richtung,
in Stelle 14 bis 16 die Ausdehnung des Rechtecks, welches die Fläche umgibt, in y-Richtung,
in Stelle 17 bis 19 die Entfernung eines eindeutig im Feld befindlichen Punktes vom linken oberen Eckpunkt in x-Richtung und
in Stelle 20 bis 22 die Entfernung eines eindeutig im Feld befindlichen Punktes vom linken oberen Eckpunkt in y-Richtung umfaßt.

5. Verfahren nach Anspruch 4,
**dadurch gekennzeichnet, daß**
die Codierung des Flächenidentifikators mit den Zeichen 0 bis 9 und A bis Z als Zahlensystem mit der Basis 36 vorgenommen wird.

## Claims

1. A method for defining an area, in particular a field, a portion of a field or a logging area, through geo coordinates for documentation and/or navigation purposes including the following steps:
- assigning an area identifier to each relevant area in a territory, wherein the area identifier is comprised of a multi digit, in particular 22-digit numerical and/or alphanumerical character sequence, which is formed from the respective geo coordinates of a corner point and an enveloping rectangle, and wherein the area identifier is computer generated respectively through a predetermined key;
- storing the particular areas provided in the territory in a data base through the respective enveloping or defining rectangles associated with the area identifiers, wherein the data base is part of a geo information system;
- providing access to the area identifiers of the data base through wireless or line based data exchange, wherein a navigation to the desired area is performed through a mobile GPS receiver by entering a corner coordinate or a point which is unambiguously disposed in the area and the mobile GPS receiver signals reaching the respective area which is disposed within the defined rectangle when passing the boundary of the rectangle defined by the respective area identifier and wherein
- the size of the enveloping rectangle and thus approximately the surface area of the respective field or logging area is determinable from each area identifier by using the key.

2. A method according to claim 1, wherein passing an area boundary is determinable based on the area identifier represented as an encoded parameter while performing GPS navigation and particular activities are thus controllable like working the area e.g. by plowing, grubbing, putting down fertilizer, sowing, threshing.

3. A method according to one of the preceding claims, wherein a remote access to the data base is facilitated through a public telecommunication network in a line based or wireless manner, thus in particular through GSM- or UMTS-network.

4. A method according to one of the preceding claims, wherein
- the area identifier comprises an x-coordinate of an left upper corner point of the rectangle in positions 1 through 5, wherein the rectangle envelops the area;
- the area identifier comprises a y-coordinate of the left upper corner point of the rectangle in positions 6 through 10, wherein the rectangle envelops the area;
- the area identifier comprises a dimension of the rectangle in x-direction in positions 11 through 13, wherein the rectangle envelops the area;
- the area identifier comprises a dimension of the rectangle in y-direction in positions 14 through 16, wherein the rectangle envelops the area;
- the area identifier comprises a distance of a point from the left upper corner point in x-direction in positions 17 through 19, wherein the point is disposed in the field unambiguously; and
- the area identifier comprises a distance of a point from the left upper corner point in y-direction in positions 20 through 22, wherein the point is disposed in the field unambiguously.

5. A method according to claim 4, wherein encoding the area identifier is performed with the characters 0 to 9 and A to Z as a numerical system with the base 36.

## Revendications

1. Procédé pour la détermination d'une surface, en particulier d'un champ, d'une parcelle ou d'un abattage, à l'aide de coordonnées géodésiques dans le but de la documentation et/ou de la navigation, dans lequel :
- dans un territoire, on associe un identificateur de surface à chaque surface individuelle pertinente, lequel est une succession de signes numériques et/ou alphanumériques présentant une multiplicité de positions, en particulier 22 positions, succession qui est formée par les coordonnées géodésiques respectives d'un coin et par le rectangle qui l'entoure, et l'identificateur est généré à l'aide d'un ordinateur à chaque fois au moyen d'une clé prédéterminée,
- les surfaces individuelles présentes dans le territoire sont déposées dans une base de données via les rectangles respectifs entourants ou limitants associés au moyen de l'identificateur de surface, ladite base de données étant une partie constitutive d'un système d'informations géodésiques,
- une préparation de l'accès aux identificateurs de surface de la base de données a lieu au moyen d'un échange de données sans fil ou par une liaison filaire, et une navigation à la surface recherchée est exécutée au moyen d'un récepteur GPS mobile par saisie d'une coordonnée d'un coin ou d'un point qui se trouve clairement dans la surface et, lors d'un dépassement de la limite du rectangle défini au moyen de l'identificateur de surface respectif, le récepteur GPS mobile signalise que l'on a atteint la surface souhaitée qui se trouve à l'intérieur du rectangle défini, et dans lequel
- à partir de chaque identificateur de surface et en utilisant la clé, on peut déterminer la taille du rectangle enveloppant et ainsi approximativement la surface du champ ou de l'abattage concerné.

2. Procédé selon la revendication 1,
**caractérisé en ce que**, à l'aide de l'identificateur de surface en tant que nombre caractéristique codé, on peut constater que l'on dépasse une limite de surface en effectuant simultanément une navigation GPS, et grâce à cela, des activités, comme le travail d'une surface, par exemple par labourage, culture, épandage d'engrais, semailles, battage, sont susceptibles d'être commandées de manière ciblée.

3. Procédé selon l'une des revendications précédentes,
**caractérisé en ce que** l'accès à distance à la base de données a lieu via un réseau de télécommunications public, par une liaison filaire ou sans fil, en particulier ici le réseau GSM ou UMTS.

4. Procédé selon l'une des revendications précédentes,
**caractérisé en ce que** l'identificateur de surface comprend aux positions 1 à 5, la coordonnée x du coin supérieur gauche du rectangle qui entoure la surface,
aux positions 6 à 10, la coordonnée y du coin supérieur gauche du rectangle qui entoure la surface,
aux positions 11 à 13, l'extension du rectangle qui entoure la surface, en direction x,
aux positions 14 à 16, l'extension du rectangle qui entoure la surface, en direction y,
aux positions 17 à 19, l'éloignement d'un point qui se trouve clairement dans le champ depuis le coin supérieur gauche en direction x, et
aux positions 20 à 22, l'éloignement d'un point qui se trouve clairement dans le champ depuis le coin supérieur gauche en direction y.

5. Procédé selon la revendication 4,
**caractérisé en ce que** le codage de l'identificateur de surface est exécuté avec les signes 0 à 9 et A à Z en tant que système de comptage de base 36.
